# FASCICULE DE BREVET EUROPEEN

(11) **EP 0 703 108 B1**
(45) Date de publication et mention de la délivrance du brevet: **01.08.2001**
(21) Numéro de dépôt: 95117789.8
(22) Date de dépôt: 06.09.1990
(51) Int. Cl.: B60J 10/02

(54) **Vitrage avec cadre profilé particulièrement vitrage automobile et sa méthode de pose**
Verglasung mit einem Profilrahmen, insbesondere Fahrzeugverglasung und Verfahren zu dessen Anwendung
Glazing with profile frame, in particular vehicle glazing, and method of applying same

(30) Priorité: 12.09.1989 DE 3930414; 31.05.1990 US 531191
(43) Date de publication de la demande: 27.03.1996
(62) Demande divisionnaire de: 94105771.3
(73) Titulaire: SAINT-GOBAIN GLASS FRANCE, 92400 Courbevoie (FR); SEKURIT SAINT GOBAIN Deutschland GmbH & Co. KG, 52066 Aachen (DE)
(72) Inventeur: Cornils, Gerd, D-52399 Merzenich-Girbelsrath (DE); Schnitter, Heinrich, D-52152 Simmerath (DE); Kunert, Heinz, D-50935 Köln 41 (DE)
(74) Mandataire: Breton, Jean-Claude

(56) Documents cités:
- EP-A- 0 345 134
- DE-A- 3 323 006
- DE-U- 8 202 672
- US-A- 4 765 673
- US-A- 4 833 847

## Description

L'invention concerne un vitrage prévu pour le collage sur la tôle d'une baie de fenêtre, en particulier un vitrage automobile. Celui-ci est équipé notamment par extrusion d'un polymère adapté sur la surface du verre en face de la tôle, d'un cadre profilé qui, après polymérisation, servira grâce à un appendice, d'élément de protection et de centrage pendant la prise de la colle fixant le vitrage.

Les vitrages automobiles sont aujourd'hui dans leur majorité collés directement sur la tôle de la baie dans la carrosserie. Il s'est avéré intéressant de préparer le vitrage en vue de son montage par une phase de travail préliminaire par exemple dans l'usine où le vitrage a été produit. On l'équipe ainsi d'un profilé par extrusion sur le vitrage qui, après polymérisation, coopérera avec le vitrage et le cordon de colle destiné au collage final du vitrage. En procédant de la sorte on limite, lors du montage du pare-brise, les opérations de nettoyage et de primage du vitrage. Globalement l'opération de préparation et de montage du vitrage est ainsi plus économique. Ce procédé est décrit par exemple dans le brevet EP-A-0 121 481.

Mais lorsqu'on pose le vitrage dans la baie de la carrosserie, il est essentiel qu'il occupe, durant la phase de prise du cordon de colle, une place bien définie et qu'il la garde. On utilise pour ce faire des dispositifs ou des accessoires adaptés, ainsi, dans la demande de brevet EP-A-307 317 on décrit un dispositif avec des tiges dirigées vers la surface du vitrage qui comportent une surface d'appui. Lors du montage du pare-brise elles servent à en supporter le poids, en effet elles exercent une réaction sur la baie de la fenêtre. Cette solution bien connue nécessite cependant des éléments d'appui supplémentaires dans la baie. Par ailleurs, il est nécessaire de surveiller la position précise du vitrage dans la baie de manière que l'écart entre le bord du vitrage et la carrosserie tel qu'il est visible de l'extérieur soit constant. S'il n'en était pas ainsi, les irrrégularités de largeur obligerait à disposer un cache pour obturer la rainure.

Le document EP-A-0 345 134, qui constitue un état de la technique au titre de l'article 54(3) et (4) CBE pour les états BE, CH, DE, ES, FR, GB, IT, LI, LU, NL, SE, AT décrit un procédé de fabrication d'un vitrage prêt à monter destiné à être collé au cadre d'une baie de carrosserie de véhicule.

Sur la feuille de verre, ou sur un revêtement opaque en forme de cadre adhérant à ladite feuille, sont déposés deux cordons partiels de colle simultanément ou immédiatement l'un après l'autre en une seule opération de coextrusion. La masse de colle formant le premier cordon durcit en un temps relativement court, alors que la masse de colle formant l'autre cordon reste plastiquement déformable et adhésive pendant un temps suffisant jusqu'au montage sur le véhicule.

Le premier cordon peut être muni d'une lèvre d'étanchéité facilitant la pose.

L'invention se donne pour mission de modifier un vitrage équipé d'un cadre profilé du type précédemment décrit de telle sorte que le centrage et l'appui du vitrage pendant sa pose et la prise de la colle s'effectuent sans intervention d'autre moyens.

Selon l'invention le vitrage, particulièrement un vitrage automobile, destiné au collage direct dans le cadre de la baie d'une fenêtre est équipé d'un cadre profilé, déposé sur une couche opaque de la surface du verre en face de la tôle, le cadre profilé possédant une fois terminé les caractéristiques d'un élastomère et étant destiné à supporter un cordon de colle de pose, le cordon de colle de pose étant déposé ultérieurement sur le vitrage alors que le cadre profilé est déjà durci, dans lequel ledit cadre profilé comporte un appendice qui est une lèvre qui déborde du vitrage, sensiblement parallèle à la surface du verre, la lèvre possédant un dimensionnement et/ou un coefficient de frottement ainsi qu'une raideur telles qu'elle réalise le centrage du vitrage et/ou son support et/ou qu'elle supporte la force de réaction qui doit être exercée pendant la durée de prise du cordon de colle.

De préférence, la lèvre a une longueur comprise entre 5 et 10 mm.

L'invention a également pour objet un procédé de fabrication d'un tel vitrage dans lequel :
- on dépose sur la couche opaque une matière polymère sous forme d'un cadre profilé comportant un appendice qui est une lèvre qui déborde du vitrage, sensiblement parallèle à la surface du verre, et
- on laisse durcir toute la matière formant le cadre.
Par ailleurs, l'invention propose un procédé de pose d'un vitrage dans le cadre d'une baie, en particulier d'une automobile, par collage, procédé qui comporte une phase préliminaire d'extrusion sur le vitrage d'un cadre profilé possédant un appendice qui servira d'élément de protection et qui est réalisé en un polymère qui, une fois terminé possède les caractéristiques d'un élastomère, le procédé comportant ensuite le dépôt au voisinage du cadre durci, d'un cordon de colle destiné au collage final du vitrage, le cordon de colle n'étant en contact du côté du vitrage qu'avec le profilé, le procédé comportant enfin une phase de mise en place du vitrage dans la baie, dans lequel le cadre profilé comporte une lèvre périphérique qui possède avant l'introduction dans la baie une forme droite, qui est sensiblement parallèle à la surface du vitrage, qui se déforme au moment de l'introduction du vitrage dans la baie et qui subit une pliure vers l'arrière de telle sorte que lorsque le vitrage est introduit dans la baie, il se trouve automatiquement centré.

Les détails et les avantages de l'invention sont expliqués dans ce qui suit grâce aux figures. Parmi celles-ci, on trouve :
- figure 1 : vitrage en position dans une baie et en coupe,
- figure 2 et figure 3 : exemples de vitrages conformes à EP-B-0 611 672,
- figure 4 : fabrication du cadre profilé grâce à une buse d'extrusion,
- figure 5 : la zone de transition du cadre profilé après le retrait de la buse d'extrusion,
- figure 6 : la rectification par pressage de la zone de transition grâce à un outil,
- figure 7 : la zone de transition du cadre profilé après la phase de pressage et,
- figure 8: une variante de l'outil de pressage .

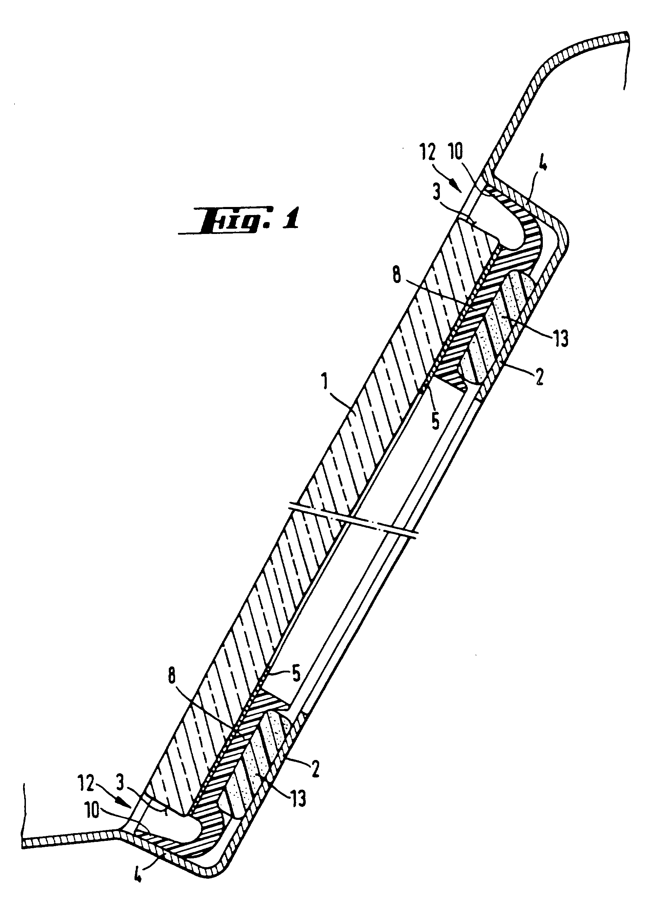

Dans la configuration représentée figure 1 le vitrage 1 est un pare-brise, il est placé dans la baie d'une carrosserie automobile. Cette baie est limitée d'une part par la tôle de fixation 2 qui est parallèle à la surface du vitrage, et d'autre part par la tôle 4 dont la surface est perpendiculaire à la surface du vitrage. Le vitrage 1 est représenté sous forme d'une feuille de verre monolithique mais il est bien évident qu'il peut s'agir aussi bien d'un vitrage feuilleté. Le vitrage 1 est équipé à sa périphérie sur la surface opposée à la tôle de fixation 2 d'une couche opaque 5 qui est par exemple constituée d'un émail cuit à chaud. La fonction de cette couche 5 est d'éviter que l'on puisse voir au travers du vitrage, à partir de l'extérieur, les éléments de collage et en même temps de protéger la colle contre les ultra-violets.

Le vitrage 1 est équipé sur sa surface opposée à la tôle de fixation 2 d'un cadre profilé 8. Celui-ci est réalisé en un polymère qui, une fois terminé, possède les caractéristiques d'un élastomère. Le cadre profilé 8 adhère à la couche opaque 5. Le cadre profilé 8 possède une lèvre périphérique 10. Cette lèvre 10 possède avant l'introduction du vitrage 1 dans la baie une forme droite. Elle est à ce moment sensiblement parallèle à la surface du vitrage et déborde de sa périphérie 3 d'environ 5 à 10 mm.

La lèvre 10 se déforme au moment de l'introduction du vitrage dans la baie et subit une pliure vers l'arrière en se positionnant sur toute sa longueur le long de la tôle 4 qui se trouve vis à vis du chant 3 du vitrage. De cette manière lorsque le vitrage est introduit dans la baie, il se trouve automatiquement centré et on voit apparaître une rainure 12 de largeur constante tout autour. Par ailleurs, la lèvre 10 est utilisée dans la partie inférieure du vitrage 1 pour supporter son poids de telle sorte qu'aucun calage n'est plus nécessaire pendant le temps qui sépare la mise en place du vitrage et la prise de la colle. De plus, la lèvre 10 sert à fermer la rainure 12 et elle la rend étanche.

Le dimensionnement de la lèvre 10, c'est-à-dire la longueur et l'épaisseur de sa section doit être déterminé de telle sorte que les fonctions à remplir par la lèvre 10 le soient le mieux possible.

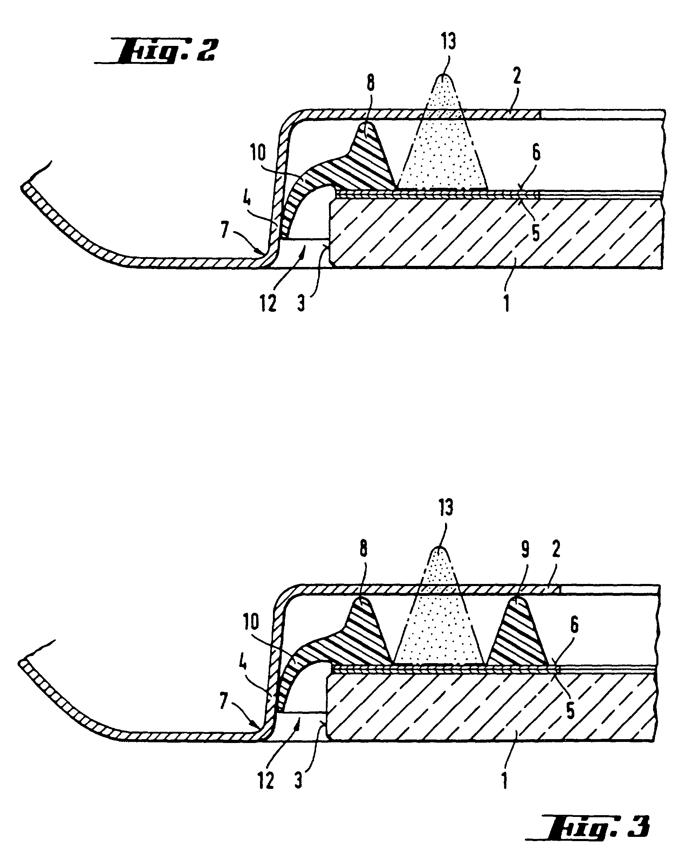

Sur la figure 2, on voit un mode de réalisation du profilé 8 selon EP-B-0 611 672. La figure 2 représente ainsi une coupe du vitrage 1 posé dans la baie de la fenêtre de la carrosserie 7. Ici le cordon de colle 13 au lieu de n'être en contact du côté du vitrage 1, qu'avec le profilé 8, est, en plus, en contact direct avec le vitrage 1 ou plus précisément avec la couche opaque 5. Un primaire d'adhérence 6 peut être prévu pour favoriser l'accrochage du cordon de colle 13 sur le vitrage.

Une variante de cette configuration est représentée en coupe sur la figure 3. On voit en 9 une deuxième partie du profilé périphérique dont le rôle est de limiter l'expansion de la colle 13. Les autres éléments y compris le cadre opaque 5 restent les mêmes que sur la figure 2.

Dans la description et les figures suivantes cette couche 5 en forme de cadre n'est plus représentée pour des raisons de simplicité.

La liaison entre le vitrage lui-même et/ou le cadre profilé 8 d'une part qui équipe le vitrage 1 au moment de sa pose et d'autre part la tôle de fixation 2 est réalisée comme on l'a vu grâce au cordon de colle 13. La colle est composée d'un polymère qui est conçu pour adhérer de manière fixe et permanente au cadre 8 et éventuellement au verre ou à la couche 5. Ce sera par exemple un polyuréthane mono-composant polymérisant grâce à l'humidité de l'air. La pression qui doit être exercée pendant la durée de prise du cordon de colle 13 entre le vitrage et la tôle de fixation 2 est également assurée grâce à la lèvre 10 du cadre profilé 8. Elle possède en effet un fort coefficient de frottement et sa raideur relative lui permet de compenser la force de réaction exercée par le cordon de colle 13.

La fabrication du cadre profilé 8 se fait d'une manière connue en soi par extrusion d'un polymère adapté et qui adhère sur le vitrage. De tels polymères adaptés à la fabrication d'un cadre profilé sont par exemple des polyuréthanes à un composant sous forme pâteuse qui se transforment sous l'influence de l'humidité de l'air en élastomère à module élevé. Des systèmes polymères de la sorte sont décrits par exemple dans le brevet américain US-A-3 779 794. Il est également possible d'utiliser des systèmes à deux composants comme ceux qui sont décrits dans les brevets européens EP-A-0083797 ou EP-A-0024501. En fonction de la nature de la colle utilisée il aura fallu préparer la surface sur laquelle le cordon est déposé à l'aide de couches de primage telles que la couche 6 selon des procédés connus.

Pour déposer le cadre profilé 8 sur le vitrage 1, on commence comme il est représenté figure 2 par déposer le vitrage sur un cadre support 15 de manière à ce qu'il soit en position horizontale. I1 est fixé dans cette position par des moyens adaptés, par exemple des ventouses. On déplace alors la tête d'extrusion le long du bord du vitrage. Cette opération est effectuée de préférence par un robot programmé en conséquence. La tête d'extrusion possède une buse 16 qui est appliquée sur le verre et se déplace dans le sens de la flèche F. La buse 16 possède sur sa face arrière 17 une ouverture calibrée 18. Celle-ci fournit au profilé 8 la forme souhaitée. La stabilité de la forme de la lèvre 10 qui est engendrée par la buse d'extrusion sur une longueur L est telle que la lèvre 10 garde sa forme et sa direction sensiblement horizontale sans avoir besoin d'être soutenue. Ce résultat est obtenu par le choix des propriétés de viscosité et de thixotropie de la matière polymérisable. Celle-ci est amenée à la buse d'extrusion 16 par le tube 19. Ce tube relie la tête d'extrusion 16 à un dispositif de pompage et de dosage qui permet de délivrer le fluide avec la pression et le débit voulus à la tête d'extrusion 16. L'extrusion s'effectue tout le long de la périphérie 3 du vitrage 1. On obtient ainsi un cadre profilé 8 fermé sur lui-même. A l'instant précis où la buse 16 atteint l'emplacement où l'extrusion a commencé, le débit de polymère est stoppé de même que le déplacement de la tête d'extrusion. La tête d'extrusion 16 est alors déplacée légèrement dans la direction de la flèche G ce qui l'écarte du verre puis un autre déplacement a lieu perpendiculairement, dans la direction de la flèche H.

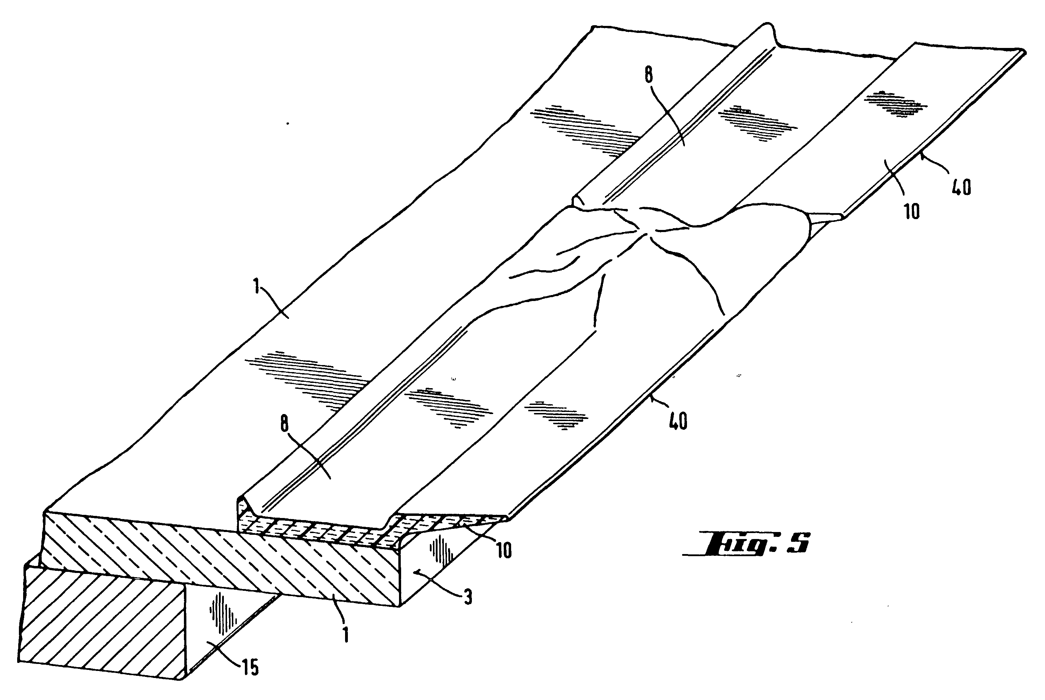

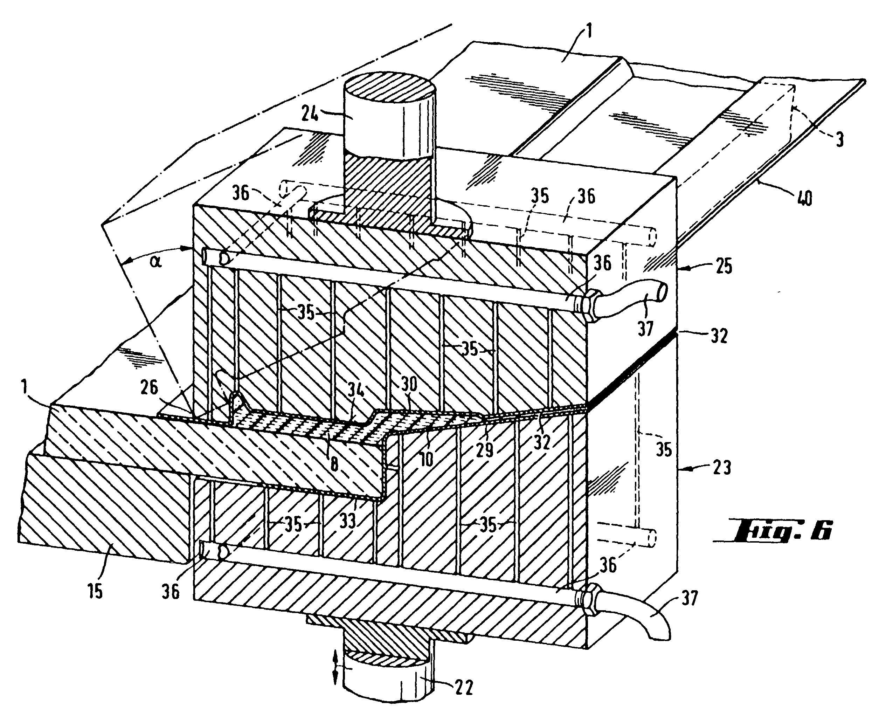

Comme le montre la figure 5, les opérations précédentes fournissent à l'endroit où la tête d'extrusion 16 s'est écartée du verre, c'est-à-dire à la soudure entre le départ et l'arrivée du cadre profilé 8, une discontinuité informe. Ce point de soudure, zone de transition entre deux parties du cadre qui ont un profil parfait, nécessite d'être traité séparément dans une phase de fabrication supplémentaire qui est représentée dans les figures 6 à 8. Pendant l'opération de rectification de la zone de transition du cadre profilé 8 le vitrage 1 repose toujours sur son cadre support 15. Dès que la tête d'extrusion a été écartée du vitrage un porte-outil adapté et non représenté sur les figures présente un outil en deux parties sur le vitrage : un pied inférieur 23 qui est associé au porte-outil par la liaison 22 ainsi qu'un poinçon 25 qui est porté, lui, grâce à la liaison 24. Le pied 23 dès qu'il a touché le vitrage par en dessous, se déplace pour venir en butée contre le bord du verre. Le poinçon 25 se présente incliné d'un angle ∝ par rapport au vitrage puis est déplacé dans cette position vers le bas jusqu'à ce que son arête 26 touche la surface du verre. I1 entame alors un mouvement de rotation autour de cette arête jusqu'à venir au contact de la feuille de verre et du pied 23. On obtient ainsi que le cadre profilé y compris sa lèvre 10 prenne la forme voulue à l'endroit du raccord du profilé. L'irrégularité est alors supprimée.

La partie supérieure du pied 23 a une forme 29 qui correspond à l'épaisseur du vitrage 1 et qui suit la partie inférieure de la lèvre 10. De même le poinçon 25 a lui aussi une forme précise 30 qui correspond à la limite supérieure du profilé 8 et de la lèvre 10. Le mouvement de translation et de basculement subi par le poinçon 25 permet de remplir les lacunes éventuelles du profilé et d'évacuer l'excès de matières dans le prolongement de la lèvre 10 au travers de la fente 32. Après polymérisation de l'élastomère, l'excès de matière pourra être ébavuré à l'extrémité de la lèvre 10.

Avant de débuter la phase de rectification précédente, c'est-à-dire lorsque l'outil de pressage est en position d'attente, on a déposé sur les surfaces 29 du pied 23 et 30 du poinçon 25 une feuille 33, 34 d'une épaisseur de 4 à 10 µm. La dimension de cette feuille est dans chaque cas celle de la pièce concernée. Les feuilles 33 et 34 doivent épouser exactement les surfaces qu'elles recouvrent. C'est pourquoi aussi bien le pied 23 que le poinçon 24 sont équipés d'une série de perçages 35 qui débouchent sur les surfaces 29 ou 30. Ces perçages sont reliés à des ajutages répartiteurs 36. L'un de ceux-ci est relié par un tuyau souple 37 à une pompe non représentée. La pompe crée une dépression qui plaque les feuilles 33 et 34 sur chacune des deux surfaces 29 et 30. A la fin de l'opération de rectification, les tuyaux 37 sont remplis d'air ce qui permet aux feuilles 33 et 34 de se séparer des outils de pressage. Les feuilles 33 et 34 restent plaquées contre le matériau du profilé 8 mais n'y adhèrent pas. On peut donc les en séparer facilement à la fin de la polymérisation.

Les feuilles 33, 34 sont constituées d'un matériau dont la surface a des propriétés anti-adhésives par rapport au matériau polymère du profilé 8. De bons résultats ont été obtenus avec des feuilles minces de polyester ou de polyéthylène. Dans le cas où le polymère du cadre profilé 8 polymérise à l'humidité de l'air, il convient que les feuilles 33 et 34 possèdent une perméabilité suffisante à la vapeur d'eau. Eventuellement, il sera nécessaire de créer une porosité déterminée cu même de percer des microperforations.

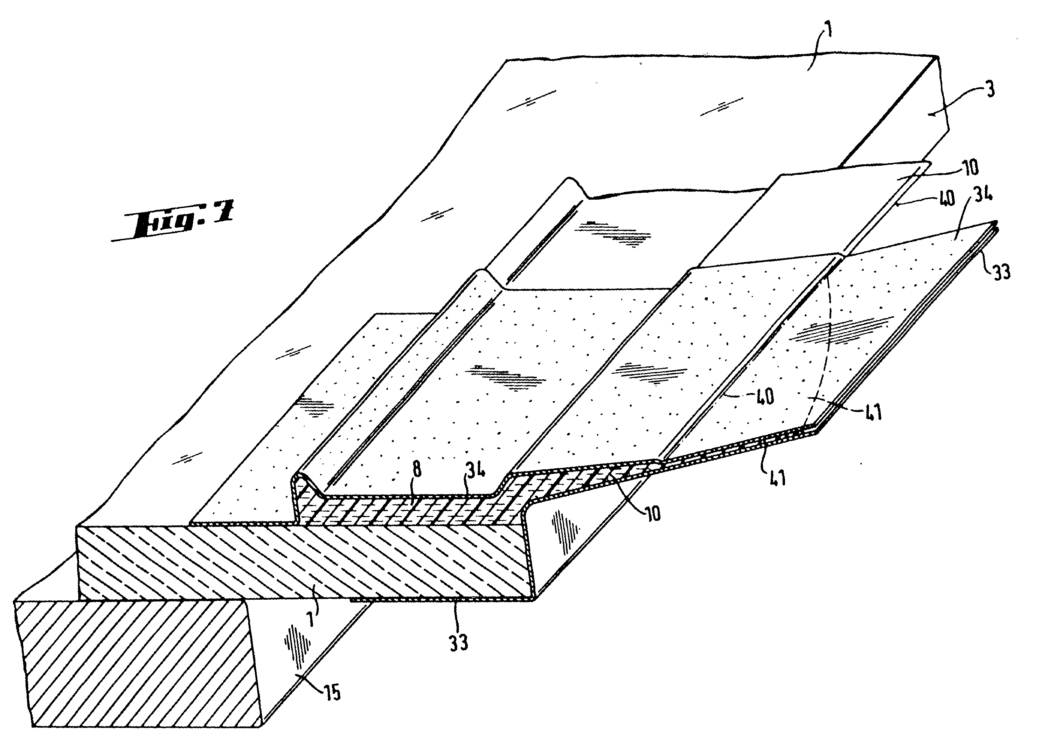

Les feuilles 34, 35 confèrent de plus à la lèvre 10 une rigidité supplémentaire durant la prise. L'excès de matière polymérisable est évacué pendant le processus de rectification ainsi qu'on l'a déjà vu, en direction du prolongement de la lèvre 10 et s'échappe sous forme d'une couche mince entre les deux feuilles 33, 34 où elle va durcir sous forme d'une bavure 41 qui déborde de la bordure 40 de la lèvre 10 (figure 7). Cette bavure 41 sera comme les feuilles 33 et 34, coupée et séparée du profilé 8 après polymérisation. Cette opération procure dans la zone de raccordement un aspect soigné à la lèvre 10 du cadre profilé 8. Pour terminer on arrache les feuilles 33, 34 restantes pour les séparer du profilé 8 et de la lèvre 10.

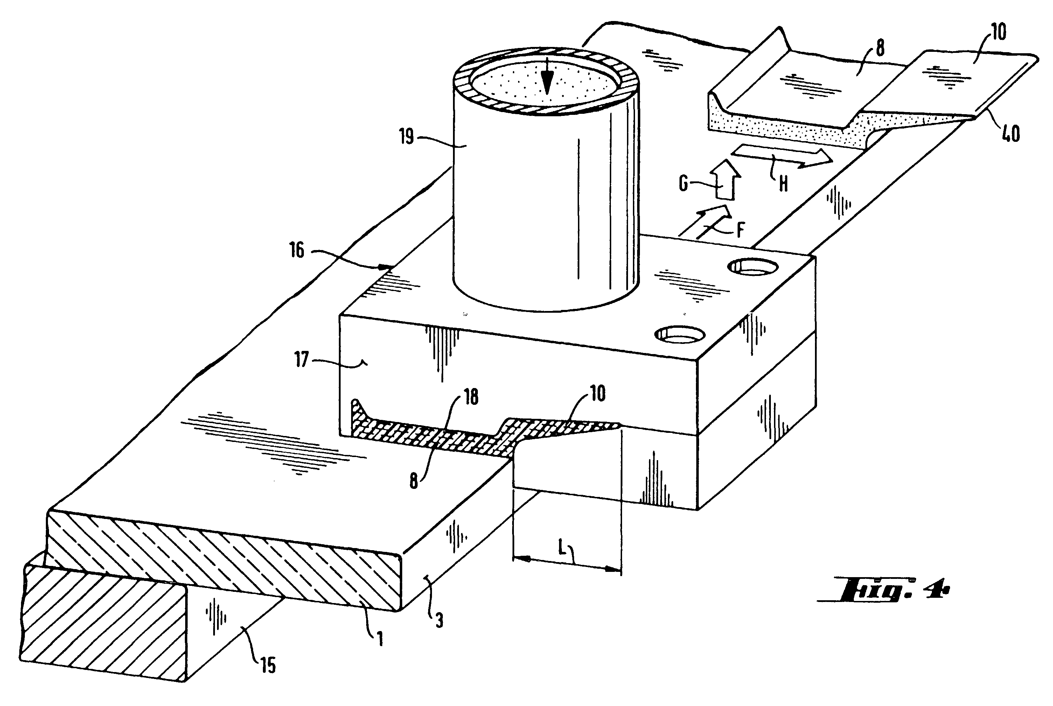

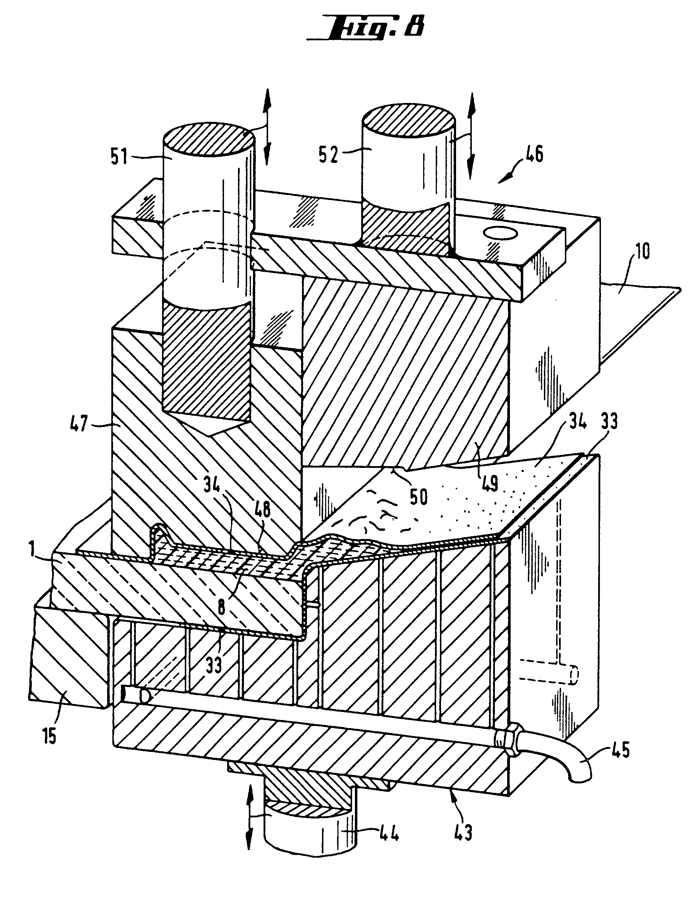

Sur la figure 8 on présente un autre mode de réalisation de l'outil de rectification. Le pied 43 a une constitution qui s'apparente à celle du pied 23 de la figure 4. Le pied est relié par une tige de guidage 44, tout comme le poinçon 46, à un porte-outil non représenté. Le pied 43 est ici aussi équipé sur sa surface supérieure de perforations. Celles-ci sont également reliées à un ajutage répartiteur qui est en communication grâce à un tuyau 45 avec une pompe qui peut y créer une dépression.

Le poinçon 46 est constitué de deux parties : la première 47 qui comporte une surface de référence 48 correspondant à la section du cadre profilé qui se trouve au-dessus du verre, et une deuxième partie 49 elle aussi équipée d'une surface calibrée 50 destinée à conformer la lèvre 10. Les deux parties, la première 47 grâce à la tige de guidage 51, et la deuxième 49 grâce à la tige 52 peuvent être manoeuvrées indépendamment l'une de l'autre. Après que le pied 43 ait été mis en place mais avant que le poinçon n'ait effectué ses propres mouvements, le film plastique qui va ici aussi s'intercaler entre le poinçon et le cadre profilé est mis en place à la fois sur le joint informe et sur les surfaces voisines du vitrage 1 et du pied 43. Alors, la partie 47 du poinçon se déplace la première et vient épouser la partie supérieure du profilé 8 situé au-dessus du vitrage 1. Enfin, la partie 49 du même poinçon vient à son tour rectifier la forme de la lèvre 10.

Les exemples de réalisation de l'invention présentés ici sont relatifs au pare-brise d'un véhicule automobile. L'invention est aussi bien valable dans les mêmes conditions pour n'importe quel vitrage comme par exemple les lunettes arrière ou les vitrages de portière, de custode, de hayon, de toit ou de protection de phares. Par ailleurs, la méthode de l'invention convient également à tous les domaines où un vitrage doit être fixé par collage à l'intérieur d'un cadre. Dans le domaine des transports, ce sera le cas par exemple des vitrages de chemin de fer ou de caravane mais les applications dans le domaine du bâtiment, dans celui du mobilier, ou même de l'appareillage ou de l'électroménager sont également à envisager.

## Revendications

1. Procédé de pose d'un vitrage (1) dans le cadre d'une baie (7), en particulier d'une automobile, par collage, procédé qui comporte une phase préliminaire d'extrusion sur le vitrage d'un cadre profilé (8) possédant un appendice qui servira d'élément de protection et qui est réalisé en un polymère qui, une fois terminé, possède les caractéristiques d'un élastomère, le procédé comportant ensuite une phase de dépôt au voisinage du cadre durci, d'un cordon de colle (13) destiné au collage final du vitrage, le cordon de colle (13) n'étant en contact du côté du vitrage qu'avec le profilé (8), le procédé comportant enfin une phase de mise en place du vitrage dans la baie, **caractérisé en ce que** le cadre profilé comporte une lèvre périphérique (10) qui possède avant l'introduction dans la baie une forme droite, qui est sensiblement parallèle à la surface du vitrage, qui se déforme au moment de l'introduction du vitrage dans la baie et qui subit une pliure vers l'arrière de telle sorte que, lorsque le vitrage est introduit dans la baie, il se trouve automatiquement centré.

2. Procédé selon la revendication 1, **caractérisé en ce que,** en partie basse du vitrage, c'est la lèvre qui support le poids du vitrage.

3. Procédé selon la revendication 1 ou 2, **caractérisé en ce** que la lèvre (10) possède un coefficient de frottement et une raideur tels qu'elle compense la force de réaction exercée par le cordon de colle (13) pendant le temps qui sépare la mise en place du vitrage et la prise de la colle.

4. Vitrage, particulièrement vitrage automobile, destiné au collage direct dans une baie, équipé d'un cadre profilé (8) déposé sur une couche opaque (5) de la surface de verre en face de la tôle, le cadre profilé possédant une fois terminé les caractéristiques d'un élastomère et étant destiné à supporter un cordon de colle de pose (13), le cordon de colle (13) étant déposé ultérieurement sur le vitrage alors que le cadre profilé (8) est déjà durci, **caractérisé en ce que** ledit cadre profilé comporte un appendice qui est une lèvre (10), qui déborde du vitrage (1), sensiblement parallèle à la surface du verre, la lèvre (10) possédant un dimensionnement et/ou un coefficient de frottement ainsi qu'une raideur tels qu'elle réalise le centrage du vitrage et/ou son support et/ou qu'elle supporte la force de réaction qui doit être exercée pendant la durée de prise du cordon de colle (13).

5. Vitrage selon la revendication 4, caractérisé en ce que la lèvre (10) déborde de la périphérie du vitrage d'environ 5 à 10 mm.

6. Procédé de fabrication d'un vitrage selon la revendication 4 ou 5, dans lequel :
- on dépose sur la couche opaque (5) une matière polymère sous forme d'un cadre profilé (8) comportant un appendice qui est une lèvre (10) qui déborde du vitrage, sensiblement parallèle à la surface du verre et,
- on laisse durcir toute la matière formant le cadre.

## Patentansprüche

1. Verfahren zum Einsetzen einer Glasscheibe (1) in den Rahmen einer Fensteröffnung, insbesondere eines Automobils, durch Kleben, welches Verfahren
- eine Vorstufe des Extrudierens eines Profilrahmens (8) auf die Glasscheibe umfasst, der einen als Schutzelement dienenden Fortsatz besitzt und der in einem Polymer ausgeführt ist, der nach Fertigstellung die Eigenschaften eines Elastomers besitzt,
- sodann eine Stufe des Ablegens eines zum endgültigen Verkleben der Glasscheibe bestimmten Kleberstrangs (13) in Nachbarschaft zu dem erstarrten Rahmen umfasst, wobei der Kleberstrang (13) auf Seiten der Glasscheibe nur mit dem Profil (8) in Kontakt ist,
- schließlich eine Stufe des Einsetzens der Glasscheibe in die Fensteröffnung umfasst,
**dadurch gekennzeichnet,** daß das Rahmenprofil eine umlaufende Lippe (10) umfasst, welche vor dem Einsetzen in die Fensteröffnung eine gerade Form besitzt, die im wesentlichen parallel zur Fläche der Glasscheibe ist, die sich im Moment des Einsetzens der Glasscheibe in die Fensteröffnung verformt und eine Faltung nach hinten erfährt derart, dass die Glasscheibe beim Einsetzen in die Fensteröffnung selbsttätig zentriert wird.

2. Verfahren nach Anspruch 1, **dadurch gekennzeichnet**, daß die Lippe im unteren Teil der Glasscheibe das Gewicht der Glasscheibe trägt.

3. Verfahren nach Anspruch 1 oder 2, **dadurch gekennzeichnet**, daß der Reibungskoeffizient und die Steifigkeit der Lippe (10) derart sind, dass sie die von dem Kleberstrang (13) in dem Zeitraum zwischen dem Einsetzen der Glasscheibe und dem Abbinden des Klebers ausgeübte Reaktionskraft kompensieren.

4. Glasscheibe, insbesondere Automobil-Glasscheibe, für die Direktverklebung in einer Fensteröffnung, mit einem Profilrahmen (8), der auf einer opaken Schicht (5) auf der dem Flansch gegenüberliegenden Oberfläche des Glases abgelegt ist, wobei der Profilrahmen nach Fertigstellung die Eigenschaften eines Elastomers besitzt und zum Tragen eines Montagekleberstrangs (13) bestimmt ist, wobei der Kleberstrang (13) später nach dem Aushärten des Profilrahmens (8) auf die Glasscheibe aufgetragen wird, **dadurch gekennzeichnet**, daß der besagte Profilrahmen (8) einen Fortsatz in Form einer eine über die Glasscheibe (1) im wesentlichen parallel zur Oberfläche der Glasscheibe hinausragende Lippe (10) besitzt, wobei die Lippe solche Abmessungen und/oder einen solchen Reibungskoeffizienten sowie eine solche Steifigkeit besitzt, dass sie eine Zentrierung der Glasscheibe und/oder deren Abstützung bewirkt und/oder die Reaktionskraft abstützt, welche während des Zeitraums des Abbindens des Kleberstrangs (13) aufgebracht werden muss.

5. Glasscheibe nach Anspruch 4, **dadurch gekennzeichnet**, daß die Lippe (10) um etwa 5 bis 10 mm über den Umfang der Glasscheibe hinausragt.

6. Verfahren zum Herstellen einer Glasscheibe nach Anspruch 4 oder 5, **dadurch gekennzeichnet**, daß man auf der opaken Schicht (5) ein Polymermaterial in Form eines Profilrahmens (8) mit einem Fortsatz ablegt, der eine über die Glasscheibe im wesentlichen parallel zur Glasoberfläche hinausragende Lippe (10) ist, und das ganze den Rahmen bildende Material aushärten lässt.

## Claims

1. Process for fitting a glazing (1) in the frame of an opening (7), particularly of a car, by bonding, said process comprising a preliminary phase of extruding on said glazing a profiled frame (8) having a projection which will serve as a protective element and which is made from a polymer which, once finished, has the characteristics of an elastomer, the process then comprising a phase of depositing in the vicinity of the hardened frame an adhesive bead (13) for the final adhesion of the glazing, the adhesive bead (13) only being in contact on the side of the glazing with the profiled frame (8), the process finally comprising a phase of putting the glazing into place in the opening, characterized in that the profiled frame has a peripheral lip (10) which, prior to introduction into the opening, has a straight shape substantially parallel to the surface of the glazing and which deforms on introducing the glazing into the opening and which undergoes a rearward folding in such a way that when the glazing is introduced into the opening, it is automatically centred.

2. Process according to claim 1, characterized in that the lip supports the weight of the glazing in the lower part of said glazing.

3. Process according to claim 1 or 2, characterized in that the lip (10) has a friction coefficient and stiffness such that it compensates the reaction force exerted by the adhesive bead (13) during the time separating the putting into place of the glazing and the setting of the adhesive.

4. Glazing, particularly car glazing, intended for direct bonding in an opening, equipped with a profiled frame (8) deposited on an opaque layer (5) of the glass surface opposite to the sheet metal profiled frame,once finished, has the characteristics of an elastomer and is intended to support a fitting adhesive bead (13), which is subsequently deposited on the glazing when the profiled frame (8) has already hardened, characterized in that said profiled frame has a projection in the form of a lip (10), which projects beyond the glazing (1) substantially parallel to the surface of the glass, the lip (10) having dimensions and/or a friction coefficient and stiffness such that it brings about the centring of the glazing and/or its support and/or it withstands the reaction force which has to be exerted throughout the setting of the adhesive bead (13).

5. Glazing according to claim 4, characterized in that the lip (10) projects beyond the periphery of the glazing by approximately 5 to 10 mm.

6. Process for the production of a glazing according to claim 4 or 5, wherein on the opaque layer (5) is deposited a polymer material in the form of a profiled frame (8) having a projection in the form of a lip (10), which projects beyond the glazing substantially parallel to the surface of the glass and all the material forming the frame is allowed to harden.
